# EUROPEAN PATENT APPLICATION

(11) **EP 2 960 839 A1**
(43) Date of publication of application: **30.12.2015**
(21) Application number: 14174822.8
(22) Date of filing: 27.06.2014
(51) Int. Cl.: G06Q 10/06, G06F 17/50

(54) **Aircraft fleet configuration**

(71) Applicant: Airbus Operations GmbH, 21129 Hamburg (DE); EADS Deutschland GmbH, 85521 Ottobrunn (DE)
(72) Inventor: Gonnsen, Johannes, 22767 Hamburg (DE); Schubotz, René, 81667 München (DE)
(74) Representative: Maiwald Patentanwalts GmbH

(57) **Abstract**

According to an exemplary embodiment of the present invention, an aircraft fleet configuration system for configuring a fleet of multiple aircraft is provided. The system comprises an input module for inputting customer-specific configuration data, a database comprising a set of rules and a processing unit for automatically varying the customer-specific configuration data in order to generate the virtual fleet. By varying the customer-specific configuration data, the weight, production lead time, operation costs, comfort, operation revenue of the aircraft fleet may be optimized.

## Description

### Field of the invention

The invention relates to the configuration of aircraft. In particular, the invention relates to an aircraft fleet configuration system, a method for configuring a fleet of multiple aircraft, a program element and a computer-readable medium.

### Background

Configuration of an aircraft is a complex task. Computer-based tools are operated by a tool operator to generalize aircraft cabin layouts, thereby observing customer-specific configuration data. In the context of the present application the customer is an airline. The customer-specific configuration data allows a customer to select interior equipment components to be installed in the aircraft, as well as the positions, in which the components are to be installed.

Such an interior equipment component may be a galley, a toilet module, a crew rest compartment, a cabin light, or a stowage compartment. The customer may also select the number of economy class passenger seats, the number of business class passenger seats and/or the number of first class passenger seats to be installed in the aircraft.

DE 100 41 031 A1 describes a method for configuring an arrangement of components in an aircraft.

### Summary of the invention

It is an object of the present invention to provide for an improved aircraft configuration which is capable of reducing overall costs for a (airline) customer and the aircraft manufacture.

This object is achieved by the subject-matter of the independent claims. Developments of the invention are stated in the dependent claims and the following description.

According to a first aspect of the invention, an aircraft fleet configuration system is provided, which is designed for configuring a fleet of multiple aircraft. This fleet may also be denoted as "virtual" fleet. The aircraft fleet comprises a multitude of aircraft and at least one aircraft of the fleet is different from the remaining aircraft of the fleet.

The system comprises an input module, a database and a processing unit. The input module is configured for inputting customer-specific configuration data. The customer-specific configuration data comprises identification data of an interior equipment component to be installed in at least one aircraft of the fleet, as well as position information which indicates a position in which the interior equipment component is to be installed in the at least one aircraft.

The database comprises a set of rules for all the interior equipment components available for installation in each aircraft of the fleet.

The processing unit is configured for automatically varying the position information (which corresponds to the position in which the (airline) customer wants the selected interior equipment component to be installed in the at least one aircraft) and/or for automatically replacing the interior equipment component (which has been selected by the customer) by another interior equipment component (which has been selected by the system), and for generating, i.e. configuring the fleet in accordance with the set of rules, wherein the at least one aircraft of the fleet comprises the interior equipment component or the other interior equipment component, by which the selected interior equipment component has been replaced.

In other words, the system is capable of generating aircraft layouts which (slightly) differ from what the customer has selected. The system may be capable of presenting a layout (2D) and/or aircraft configuration, which may comprise galley inserts, electrical equipment and further attributes of 3D geometries, which differs from what the customer has selected, if this alternative configuration is more advantageous, for example because it is less heavy or provides more passenger seats or storage space as compared to layouts which observe all constraints/rules/selections by the customer. The system generates a fleet of aircraft which is optimized with regard to multiple criteria. One criterion may be the overall weight of the fleet (not only of a single aircraft). Another criterion may be the production costs of the fleet. A third criterion may be the time necessary for reconfiguring (also known as retrofit) the cabin layouts of the aircraft of the fleet.

The aircraft fleet configuration system is capable to generate one, several or many optimized aircraft layouts in an automated manner. A tool operator is not necessary.

According to an embodiment of the invention, the processing unit is further configured for varying a connection of the interior equipment component to another interior equipment component to be installed in the at least one aircraft of the fleet.

For example, an electric wiring route may be varied by the processing unit in order to find an aircraft configuration which is less heavy.

By replacing the selected interior equipment component by another interior equipment component, the system is capable of determining, whether, for example, a centre four-trolley galley is less advantageous than two lateral two-trolley galleys.

The system may also be capable of varying a customer-selected seat pitch.

According to another exemplary embodiment, the set of rules comprises description logics for each interior equipment component to be installed in at least one aircraft of the fleet.

Each interior equipment component may be related to a specific set of logical statements and rules, which defines the interrelation of the interior equipment component to other equipment components and possible positions of installation thereof in the aircraft. These possible positions of installation may be related to a specific set of logical statements and rules, which defines the interrelation of the positions of installation to the whole cabin, to a door zone or further dedicated subzone in the aircraft, for example. A validated interrelation networks between the interior equipment components, positions of installation, further dedicated subzones and the cabin are indicated as one cabin configuration solution. According to another exemplary embodiment, the interior equipment component is selected from the group consisting of passenger seats, flight attendant seats, electric wiring, aircraft door types and location, chilled and unchilled trolleys, galley modules, galley equipment, toilet modules, crew rest compartments, and lighting elements, stowages, electrical equipment, cable connections, cable routing, cable installation, mechanical system connections, routing and installation.

According to another exemplary embodiment of the invention, the fleet comprises a plurality of aircraft which are all configured in a different manner, such that they are adapted to different missions.

According to another exemplary embodiment, the processing unit is further configured for optimizing the aircraft configurations of the aircraft of the fleet. In particular, the overall weight of the aircraft fleet may be minimized.

According to another exemplary embodiment, the set of rules comprises a sub-set of deterministic rules which do not allow for varying position information of an interior equipment component and automatically replacing an interior equipment component by another interior equipment component. Furthermore, the set of rules comprises a sub-set of non-deterministic rules which do allow for varying the position information of an interior equipment component and automatically replacing the interior equipment component by another interior equipment component.

Only the non-deterministic rules allow a variation of a position or a replacement of an interior equipment component by the processor. The deterministic rules do not allow for such a variation. Both groups of rules have to be observed at all times.

The system may be adapted for allowing the customer to select both deterministic and non-deterministic rules which are to be observed during aircraft configuration. The system may also be capable of allowing a customer to change a non-deterministic rule into a deterministic rule. There may also be deterministic rules which the customer is allowed to disregard, in which case the system does not observe them. However, there are also deterministic rules which have to be observed at all times and cannot be disregarded, even if the customer would like to do so.

According to another exemplary embodiment, a first rule of the set of rules is that a vacuum connected galley is to be connected to a vacuum supply of the aircraft and that distances of the galley and lavatory components to the vacuum supply are minimized.

A second rule of the set of rules may be that a lateral interior equipment component is to be installed either on the left side or on the right side of the aircraft. The system may be capable of first considering the lateral interior equipment component on the left side and then on the right side and determining, which side would be best.

Further examples of deterministic rules are flight mission constraints, area-specific requests, authority requirements and generic requirements.

Examples of rules are, for example, ratios of passenger seats and number of trolleys.

According to another embodiment of the invention, the processing unit is further configured to perform a pre-calculation which defines the position, the beginning and the end of different seating classes in each aircraft of the virtual fleet, before generating the fleet in accordance with the set of rules.

According to another embodiment of the invention, the processing unit is further configured to prioritize the rules to be observed, wherein a rule which is of low priority is disregarded, if observing one or more of the low priority rules would result in an aircraft configuration which contravenes a higher priority rule.

According to another aspect of the invention, a method for configuring a fleet of multiple aircraft is provided, wherein at least one aircraft of the fleet is different from the remaining aircraft of the fleet. The method comprises inputting customer-specific configuration data, the configuration data comprising identification data of an interior equipment component to be installed in at least one aircraft of the fleet and position information indicating a position where the interior equipment component is to be installed in the at least one aircraft. As a second step, the position information is automatically varied and/or the interior equipment component is automatically replaced by another interior equipment component. As a third step, the fleet is generated in accordance with a set of rules for interior equipment components available for installation in each aircraft of the fleet, wherein the at least one aircraft of the fleet comprises the interior equipment component or the other interior equipment component.

According to another aspect of the invention, a program element is provided, which, when being executed by a processor of an aircraft fleet configuration system, instructs the processor to carry out the above and below described method steps.

According to another aspect of the invention, a computer-readable medium is provided, which comprises the above program element.

A computer-readable medium may be a floppy disk, a harddisk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code.

These and other aspects of the present invention will become apparent from and elucidated with reference to the embodiments described hereinafter.

Exemplary embodiments of the present invention will now be described in the following, with reference to the following drawings.

### Brief description of the drawings

Fig. 1A shows a system according to an exemplary embodiment of the present invention.
Fig. 1B shows a representation of a method according to an exemplary embodiment of the present invention.
Fig. 2 shows a flow-chart of a method according to an exemplary embodiment of the present invention.
Fig. 3 shows the position of doors in an aircraft.

### Detailed description of embodiments

The illustration in the drawings is schematically. In different drawings, similar or identical elements are provided with the same reference numerals.

The following detailed description is merely exemplary nature and is not intended to limit application and uses. Furthermore, there is no intention to be bound by any theory presented in the preceding background or summary or the following detailed description.

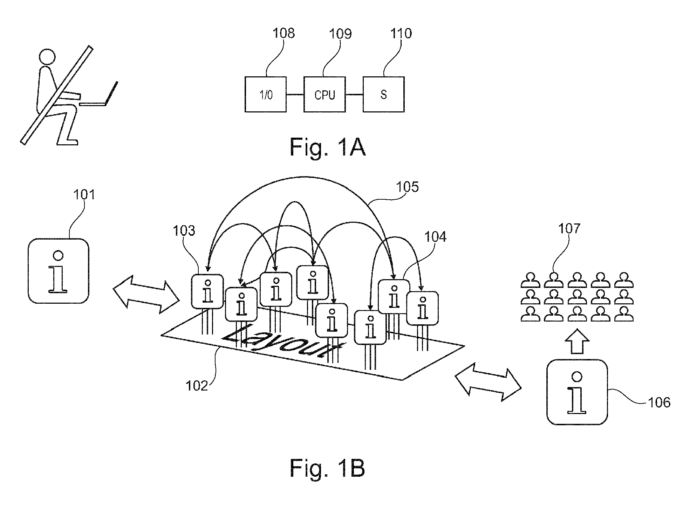

Fig. 1A shows a system according to an exemplary embodiment of the present invention which is configured to carry out the method steps which are described above and below.

The system comprises an input/output module 108, for inputting customer specific configuration data, the configuration data comprising identification data of an interior equipment component to be installed in at least one aircraft of the fleet and position information indicating a position where the interior equipment component is to be installed in the at least one aircraft.

The input/output module 108 is connected to a processing unit 109 for automatically varying the position information and/or automatically replacing the interior equipment component by another interior equipment component, and for generating the fleet in accordance with the set of rules, wherein the at least one aircraft of the fleet comprises the interior equipment component or the other interior equipment component. Furthermore, a data base 110 is provided, comprising a set of rules for interior equipment components available for installation in each aircraft of the fleet.

Fig. 1B shows a representation of a method according to an exemplary embodiment of the present invention. Information 101, i.e., customer-specific configuration data, is provided to the aircraft fleet configuration system by an input module, which the customer can access. The system calculates the layout 102 of each aircraft of an aircraft fleet, thereby observing the customer-specific configuration data 101, as well as a set of rules 103, 104, etc., which are stored on the database of the system. Each interior equipment component is related to a sub-class of the set of rules, which may be formulated by description logics. These rules constrain the possible interrelations 105 of the interior equipment components. Thus, a logic-based modelling method is provided which results in a global logical formula which defines all possible aircraft configurations, after information 101 has been input. The parameters of this global formula can be varied by the processing unit, even if they have been defined by the customer. However, of course, authority requirements, generic requirements and other strict, non-flexible rules have to be observed at all time. After an optimized fleet of aircraft has been determined by the system, data relating to the aircraft fleet 106 is output, such that it can be viewed by the customer 107.

The (airline) customer can then change the rules by changing the input information 101, such that the system can calculate another aircraft fleet, thereby allowing the (airline) customer to select between two fleet configurations.

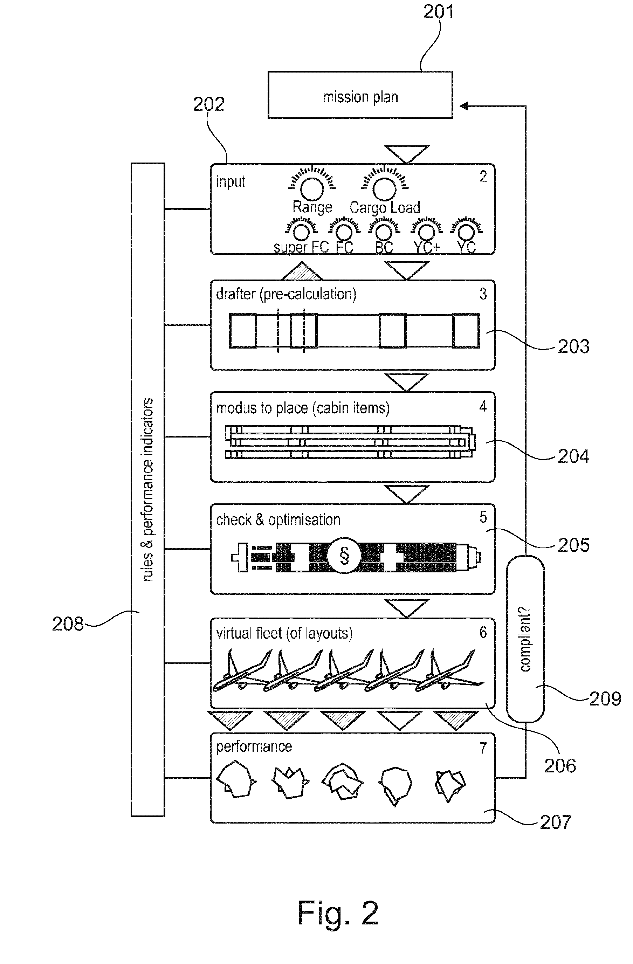

Fig. 2 shows a flow-chart of an exemplary embodiment of the invention. In step 201, a mission plan is configured which defines, for example, which different flight missions are to be performed by the aircraft of the fleet. The mission plan reflects a current and/or a future mission and represents a current and/or a future world market.

In step 202, (airline) customer-specific configuration data is input into the system. Examples are the range of a particular aircraft of the fleet, the cargo load which the aircraft should be capable to transport, and the number of seats per class.

This data is then fed into a drafter or pre-calculation module 203, which is one tool module of several tool modules of the automatic layout generation process. Each tool module is controlled by different types of rules, such as mission rules, airline rules and area-specific input parameter rules, which are also defined in step 202.

Due to the diverse functionality of the tool modules each module works with its individual input parameter packages. The process concretizes a layout in each step from a rough layout pre-calculation in step 203 at the beginning over the identification of best fitting cabin items in step 204 to one optimized layout in step 205.

More precisely, the pre-calculation module of step 203 defines the position, the beginning and the end of different seating classes in each aircraft of the virtual fleet. This may provide for an effective application of descriptive logics in step 204, since the pre-calculation allows for a decision which interior equipment components are to be installed in each region of the aircraft cabin.

In step 204 the fleet of multiple aircraft is configured by application of descriptive logics.
In the following step 205 this configuration is checked for any faults and a geometrical optimization of the configuration ("fine tuning") may be performed. For example, in step 205 it is assured that the position of each passenger seat corresponds to the position of a respective connection point for attaching the seat to the primary structure of the aircraft fuselage.

By varying the input parameter and baseline configurations, several layouts are created which result in a virtual fleet in step 206. A performance analysis is carried out in step 207 which shows if the baseline design and the related virtual fleet meets the mission plan 201 . This is done in step 209.

Each of the steps 202 to 207 is carried out according to specific rules and performance indicators 208. Example for performance indicators are: Available space for required amount of seats creating more seating comfort, available cabin space, creating more comfort in the cabin, booked on board services related to seating areas, economy class seat revenue, business class seat revenue, cargo revenue measured in yields (profit per flown mile).

After the input of customer-specific configuration data, a pre-calculation of a possible cabin layout is performed and a possible location of the seating class dividers is determined. Then, the cabin item configuration (not only the layout but also the wiring, light arrangement, etc.) is calculated based on the set of deterministic and non-deterministic rules.

In case the customer did not define enough rules to be observed, such that the system is not able to determine the configuration of a virtual fleet within a predetermined time scale, the system may be capable of automatically defining further rules, which have to be observed. These further rules may be deterministic or non-deterministic rules, i.e., rules which cannot be varied or rules which can be varied in order to optimize the result. Alternatively or additionally the system can be adapted to prioritize the rules to be observed, wherein a rule which is of low priority may be disregarded, if observing one or more of the low priority rules would result in an aircraft configuration which contravenes a higher priority rule.

The system may work without a tool operator to gain many layouts which can then be compared to each other in order to find the optimal layouts. The airline/customers' requests are collected and mixed with flight mission constraints as well as area-specific requests, authority requirements and generic requirements.

Pre-calculation of the cabin layout gives the location of a seating class divider. The seat ratios which correspond to the position of the seating class dividers are used by a further tool module, which is collecting the relevant and feasible layout configurations regarding separate cabin items, such as galleys, lavatories, stowage compartments and seats.

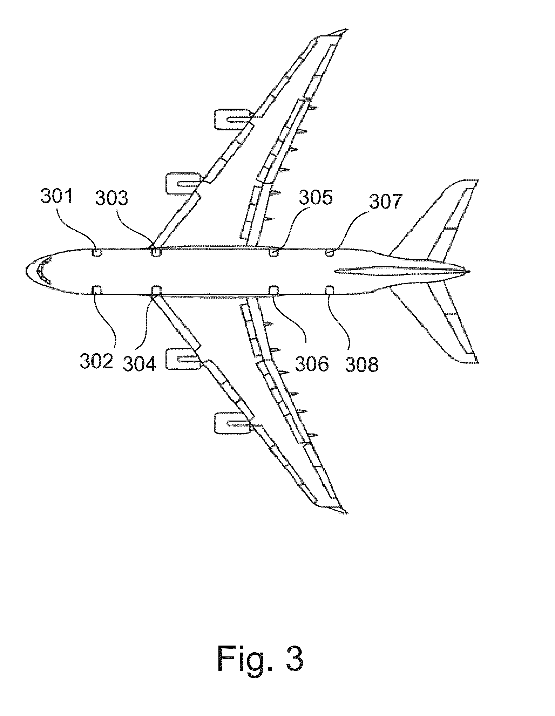

The second module is working with topologies, which reflect simplified locations in a cabin, as for example the first forward location of the door 2 on the left-hand side (see Fig. 3). The first forward location is the location next to the door followed by further monuments on the second location or followed by seats. Furthermore, all cabin items, such as galleys, lavatories and storage compartments, and also seats have a link to these topologies.

This mapping is used to describe logical statements coming from the entire requests controlling the layout configuration.

All valid descriptions are selected by the second module, followed by a detailed allocation of the cabin items, as well as the selection of the most beneficial configurations. This results in a final layout which will be generated by all valid single configurations selected by the second module.

Observing customers' requests on a general layout configuration level, as well as authority and general aircraft requirements, is done by defining a flight mission by a set of layout input parameters. These input parameters comprise detailed ratios of passenger to lavatory, passenger to chilled or non-chilled trolleys, passenger to overhead stowage volume, available coat rod lengths per passenger etc., dependencies, relationships between equipment components, advantages, constraints, cabin attendant seat interaction (-example: a transversal galley has the trolley access where a cabin attendant seat might be located. So the combination of both may not be feasible), logics, rules, etc. The generation of optimized layouts of the aircraft of a virtual fleet may thus be achieved.

The system may also be configured for observing the rule that a maximum time necessary for reconfiguring the configuration/layout of an aircraft of the fleet should not exceed a certain time, e.g. 4 hours, 8 hours or 12 hours.

According to further exemplary embodiments, the system is configured for observing one or more (or even all) of the following rules:
Allow dedicated items, i.e. interior equipment components, which cannot be selected by the user and are therefore outside of the offered range of interior equipment components, but inside the technical feasible installation zones.

If there is a choice to select several connections from monuments such as lavatories or galleys to the system supply, than the most optimized balanced system supply shall be taken.

Restrict combinations of offered packages, which are reflecting a set of interior equipment components, with further interior equipment components.

Control a fully or partly layout reconfiguration in order to increase or decrease the number of seats of dedicated seating class.

Distribute seats in a way that physical passenger access as well as access to signs, oxygen masks or screens will be considered.

Depending on a center monument as lavatories, stowages, partitions and galleys only dedicated cabin items such as particular monuments as lavatories, stowages, partitions and galleys fit in lateral position and vice versa.

The aisle width shall be selectable in a bigger size than required by the authorities on demand.

Reduce first lateral seat row modules of the rear seating class by one center seat if e.g. 9 or 6 abreast seating is followed by 8 or 4 abreast seating.

Passengers shall have the chance to access from one side of the cabin (e.g. left hand side) the opposite side (e.g. right hand side).

The rating of a door shall be selected in a way that the required amount of passengers can be evacuated according the current authorities' rules and with a minimum passenger rating except for layouts related to retrofit.

Install monuments as lavatories, stowages, partitions and galleys forward and/or aft of the boarding door according the entire requirements.

Use the optimized space relationship between overhead stowage compartment type and seat abreast configuration to support boarding or seat count or stowage volume or comfort or further needs.

A door has an allowed passenger rating for evacuation. If the rating of a door is exceeded, than the interior equipment components shall be selected on locations where as consequence the counted passenger calculation of doors is valid.

Distribute the required trolleys of galleys in a way that the right hand catering will be considered as well as further system supply constraints.

Allow installation of special sized galleys at specific subzones.

Avoid catering from dedicated door areas, when required.

Install no galleys at the forward door 1 or no galleys at door 2 or no galleys at door 3 according the entire requirements.

Avoid positioning of interior equipment components in a way that the floor structure will be unnecessarily affected by heavy weight.

Trolleys have to be installed in the center area until the trolley limit of 2 face to face galleys is reached (by considering limited galley width). Then install trolleys at lateral position, if passenger's lavatory access is not disturbing.

The interior equipment components shall be located according the major part of related passengers seats and an optimized system supply, no service area shall disturb the passenger flow to a lavatory access.

No lavatory passenger flow shall disturb service areas.

If an odd number of lavatories has to be installed for a seating zone than install a centre lavatory in y direction (cross wise to the center line) or an additional lavatory on one lateral side which has an undisturbed access.

Install minimum one lavatory at the rear door for cabin crew access in a way that further needed monuments as galleys and stowages can be placed. Lavatory distribution shall consider shortest or even distances to passenger seats according the entire layout requirements.

No lavatory door or galley access shall be beside passenger seats.

If a lavatory in seating areas with 8 abreast seats is required and if no lavatory for disabled passenger is required, use an short but big width lavatory and/or lavatory in y direction (cross wise to the center line) in a dedicated door area in the center area.

Check that the maximum loads of lower attachments are not exceeded related to a dedicated area as e.g. a defined quarter on the floor level in several locations.

Check that the maximum loads of upper attachments are not exceeded or propose an alternative layout configuration.

The cabin interior components will be located in a way that the allowed weight will not be exceeded in a dedicated area or the cabin interior components will get a related maximum load restriction.

Monuments as lavatories, stowages, partitions and galleys shall be placed to supply the related seating class directly or through a allowed lower or higher comfort seating class according entire layout requirements.

Control to install monuments as lavatories, stowages, partitions and galleys at the lateral position forward of the door if not required differently.

If an economy class seat row shall be used as cabin crew rest area, then increase seat pitch for these row.

If cabin attendant seat based rest areas are demanded by (airline) customer use, high comfort cabin attendant seat within the valid areas.

Select monument sizes as lavatories, stowages, partitions and galleys in the center according the size of the lateral seats. Select lateral monuments sizes as lavatories, stowages, partitions and galleys according the size of center seats.

Allow island seating class with no supply of monuments as lavatories, and galleys in the seating class if requested by customer.

If all seats of a class can be placed between the forward door 1 and door 2 by not installing monuments forward door 2, then no monuments as lavatories, stowages and galleys (except partitions) are allowed in front of door 2.

If the longitudinal aisle or the lining is violated by seats, then install narrow seat types to solve the violation.

If narrow seats cannot solve the violation with the lining, then reduce lateral seat benches by one seat.

If there are different seat pitches within one cabin zone the bigger seat pitch should be forward (except rear rest crew areas).

Install the class with the bigger seat pitch (higher seating comfort class) within one cabin zone at best fitting position.

Seat pitches shall be distributed as constant as possible with no more difference than 1" max in one individual cabin zone.

If lateral position behind the forward door 1 is occupied by a lavatory or galley, install a center monument which is combinable.

If space is not sufficient for a stowage, than install a doghouse aft of the seat and in front of the monument or use stowages elsewhere as e.g. in the ceiling area.

Prefer installation as coat and/or wheelchair stowages according the boarding-door by considering disabled person's lavatory access.

Fig. 3 shows the position of doors in an aircraft. The left and right front doors 301, 302 are denoted as doors 1. The following doors 303, 304 are denoted as doors 2, the following two doors 305, 306 as doors 3 and the two back doors 307, 308 as doors 4.

It should be noted that the term "comprising" does not rule out a plurality. It should further be noted that features described with reference to one of the above exemplary embodiments can also be used in combination with other features of other exemplary embodiments described above. Moreover, while at least one exemplary embodiment has been presented in the foregoing summary and detailed description, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing an exemplary embodiment, it being understood that various changes may be made in the functional arrangement of elements described in an exemplary embodiment without departing from the scope as set forth in the appended claims and their legal equivalence.

## Claims

1. An aircraft fleet configuration system for configuring a fleet of multiple aircraft, at least one aircraft of the fleet being different from the remaining aircraft of the fleet, the system comprising:
an input module for inputting customer specific configuration data, the configuration data comprising identification data of an interior equipment component to be installed in at least one aircraft of the fleet and position information indicating a position where the interior equipment component is to be installed in the at least one aircraft;
a data base comprising a set of rules for interior equipment components available for installation in each aircraft of the fleet;
a processing unit for automatically varying the position information and/or automatically replacing the interior equipment component by another interior equipment component, and for generating the fleet in accordance with the set of rules, wherein the at least one aircraft of the fleet comprises the interior equipment component or the other interior equipment component.

2. Aircraft fleet configuration system according to claim 1,
wherein the processing unit is further configured for varying a connection of the interior equipment component to another interior equipment component to be installed in the at least one aircraft of the fleet.

3. Aircraft fleet configuration system according to claim 1 or 2,
wherein the set of rules is based on description logics for each interior equipment component to be installed in at least one aircraft of the fleet.

4. Aircraft fleet configuration system according to claim 3,
wherein the processing unit is further configured to perform a final check of a layout of the virtual fleet and to perform a geometrical optimization of the layout.

5. Aircraft fleet configuration system according to one of the preceding claims,
wherein the interior equipment component is selected from the group consisting of passenger seats, flight attendant seats, electric wiring, aircraft aircraft door types and locations, chilled and unchilled trolleys, galley modules, galley equipment, toilet modules, crew rest compartments, and lighting elements, stowages, electrical equipment, cable connections, cable routing, cable installation, mechanical system connections, routing and installation.

6. Aircraft fleet configuration system according to one of the preceding claims,
wherein the fleet comprises a plurality of aircraft which are all configured in a different manner.

7. Aircraft fleet configuration system according to one of the preceding claims,
wherein the processing unit is further configured for optimizing the aircraft configurations of the aircraft of the fleet.

8. Aircraft fleet configuration system according to one of the preceding claims,
wherein the set of rules comprises a sub-set of deterministic rules which do not allow varying a position information of an interior equipment component and automatically replacing an interior equipment component by another interior equipment component;
wherein the set of rule comprises a sub-set of non-deterministic rules which do allow varying the position information of an interior equipment component and automatically replacing the interior equipment component by another interior equipment component.

9. Aircraft fleet configuration system according to claim 8,
wherein the sub-set of deterministic rules is related to a first section of the aircraft;
wherein the sub-set of non-deterministic rules is related to a second section of the aircraft which is different from the first section.

10. Aircraft fleet configuration system according to one of the preceding claims,
wherein a first rule of the set of rules is that a vacuum connected galley is to be connected to a vacuum supply of the aircraft and that distances of the galley and lavatory components to the vacuum supply are minimized.

11. Aircraft fleet configuration system according to one of the preceding claims,
wherein a second rule of the set of rules is that a lateral interior equipment component is to be installed either on the left side or the right side of the aircraft.

12. Aircraft fleet configuration system according to one of the preceding claims,
wherein the processing unit is further configured to perform a pre-calculation which defines the position, the beginning and the end of different seating classes in each aircraft of the virtual fleet, before generating the fleet in accordance with the set of rules.

13. Aircraft fleet configuration system according to one of the preceding claims,
wherein the processing unit is further configured to prioritize the rules to be observed, wherein a rule which is of low priority is disregarded, if observing one or more of the low priority rules would result in an aircraft configuration which contravenes a higher priority rule.

14. Method for configuring a fleet of multiple aircraft, at least one aircraft of the fleet being different from the remaining aircraft of the fleet, the method comprising:
inputting customer specific configuration data, the configuration data comprising identification data of an interior equipment component to be installed in at least one aircraft of the fleet and position information indicating a position where the interior equipment component is to be installed in the at least one aircraft;
automatically varying the position information and/or automatically replacing the interior equipment component by another interior equipment component;
generating the fleet in accordance with a set of rules for interior equipment components available for installation in each aircraft of the fleet, wherein the at least one aircraft of the fleet comprises the interior equipment component or the other interior equipment component.

15. Program element which, when being executed by a processor of an aircraft fleet configuration system, instructs the processor to carry out the steps of:
receiving customer specific configuration data, the configuration data comprising identification data of an interior equipment component to be installed in at least one aircraft of the fleet and position information indicating a position where the interior equipment component is to be installed in the at least one aircraft;
automatically varying the position information and/or automatically replacing the interior equipment component by another interior equipment component;
generating the fleet in accordance with a set of rules for interior equipment components available for installation in each aircraft of the fleet, wherein the at least one aircraft of the fleet comprises the interior equipment component or the other interior equipment component.

16. Computer-readable medium, comprising a program element of claim 13.
